(19)

**Europäisches Patentamt**
**European Patent Office**
**Office européen des brevets**

(11) **EP 4 579 269 A1**

(12) **EUROPEAN PATENT APPLICATION**

(43) Date of publication:
02.07.2025   Bulletin 2025/27

(21) Application number: 24180595.1

(22) Date of filing: 06.06.2024

(51) International Patent Classification (IPC):
$G01S\ 7/35$ (2006.01)   $G01S\ 13/00$ (2006.01)
$G01S\ 13/34$ (2006.01)   $G01S\ 13/58$ (2006.01)
$G01S\ 13/931$ (2020.01)

(52) Cooperative Patent Classification (CPC):
G01S 7/354; G01S 7/356; G01S 13/006;
G01S 13/343; G01S 13/584; G01S 13/931;
G01S 2013/93271

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.12.2023  US 202318396880

(71) Applicant: Aptiv Technologies AG
8200 Schaffhausen (CH)

(72) Inventor: YU, Xining
Carmel, IN, 46023 (US)

(74) Representative: Manitz Finsterwald
Patent- und Rechtsanwaltspartnerschaft mbB
Martin-Greif-Strasse 1
80336 München (DE)

(54) **RADAR SYSTEMS AND METHODS FOR ESTIMATING RANGE AND VELOCITY USING STEPPED-FREQUENCY WAVEFORMS**

(57)   Radar systems and methods are provided and include transmitting radar signals within a frame having $N$ radar chirps with a stepped frequency waveform, receiving and sampling radar signals reflected from a target, performing range fast Fourier transform (FFT) processing, including a first domain FFT, and Doppler FFT processing, including a second domain FFT, on the receive values to generate range FFT values and Doppler FFT values. A range and a velocity of the target are estimated based on the range FFT values and Doppler FFT values, wherein the estimated range, $r$, and the estimated velocity, $v$, of the target are calculated based on at least one equation that includes (i) a first term corresponding to a target range, $r_o$, measured by a first radar chirp of the $N$ radar chirps, and (ii) a second term corresponding to a center wavelength, $\lambda_{N/2}$, of the plurality of radar chirps of the frame.

**FIG. 4**

EP 4 579 269 A1

**Description**

FIELD

The present disclosure relates to radar systems and methods and, more particularly, to radar systems and methods that estimate range and velocity using stepped-frequency waveforms.

BACKGROUND

This section provides background information related to the present disclosure which is not necessarily prior art.

Automotive radar sensors are used in vehicle sensing systems to determine information about objects in the environment of the vehicle, such as the location, size, orientation, velocity, and acceleration of objects in the environment of the vehicle. The sensed information can, for example, be used by other vehicle systems, such as autonomous driving systems and/or advanced driver assistance systems (ADAS), such as automatic and adaptive cruise control systems, blind spot monitoring systems, etc., to control steering systems, braking systems, throttle systems, driver alert and warning systems, and/or other vehicle systems.

A radar system may transmit a number of radar chirps within a particular transmit frame and then receive signals corresponding to the transmitted chirps reflected from an object within the environment of the vehicle. The frequency of the radar signal may vary during each individual chirp. For example, the frequency during a particular chirp may increase during the time period of the chirp from an initial frequency of the chirp to a higher end frequency of the chirp, resulting in an up-chirp having a frequency that increases over the time period of the chirp. Alternatively, the frequency during a particular chirp may decrease during the time period of the chirp from an initial frequency of the chirp to a lower end frequency of the chirp, resulting in a down-chirp having a frequency that decreases over the time period of the chirp.

In addition, the initial frequency and the end frequency of each chirp can stay the same for each chirp over the course of the transmit frame. In other radar systems, however, a stepped-frequency waveform can be used such that the initial frequencies and end frequencies of the transmitted signals change from chirp to chirp. For example, a radar system may utilize a down-frame or step-down frequency waveform such that the initial frequency and end frequency of each subsequent chirp is lower than the initial frequency and end frequency of the previous chirp within the frame. Alternatively, a radar system may utilize an up-frame or step-up frequency waveform such that the initial frequency and end frequency of each subsequent chirp is higher than the initial frequency and end frequency of the previous chirp within the frame.

Existing radar systems, however, can be subject to errors due to range migration, Doppler aliasing, etc.

SUMMARY

This section provides a general summary of the disclosure and is not a comprehensive disclosure of its full scope or all of its features.

A radar system is provided an includes at least one processor and memory configured to: transmit radar signals within a frame having $N$ radar chirps, the $N$ radar chirps having a stepped frequency waveform such that an initial transmit frequency and an end transmit frequency are changed for each subsequent chirp within the $N$ radar chirps, and with $N$ being greater than 1; receive and sample radar signals reflected from a target to generate receive values from the received and sampled radar signals; perform range fast Fourier transform (FFT) processing, including a first domain FFT, and Doppler FFT processing, including a second domain FFT, on the receive values to generate range FFT values and Doppler FFT values; estimate a range and a velocity of the target based on the range FFT values and Doppler FFT values, wherein the estimated range, $r$, and the estimated velocity, $v$, of the target are calculated based on at least one equation that includes (i) a first term corresponding to a target range, $r_o$, measured by a first radar chirp of the $N$ radar chirps, and (ii) a second term corresponding to a center wavelength, $\lambda_{N/2}$, of the plurality of radar chirps of the frame.

In other features, the at least one equation further includes a third term corresponding to an average range measurement from all $N$ radar chirps within the frame, $r_0 - \dfrac{vT_N}{2}$, where $T_N$ corresponds to the transmitting time of each chirp.

In other features, at least one equation includes the following equations:

$$F_1 = f_{r1}\left(r_0 - \frac{vT_N}{2}\right) - s_c \frac{2v}{\lambda_{N/2}}$$

$$F_2 = s_c s_f f_{r2} r_0 - s_c \frac{2v}{\lambda_0}$$

wherein: $F_1$ and $F_2$ represent frequencies measured after the first and second domain FFTs, respectively; $s_c$ and $s_f$ represent directions of the chirp and frame slope, respectively; $f_{r1}$ represents a first domain range frequency, defined as

$$f_{r1} = \frac{2k_c}{c}$$, where $k_c$ is a chirp slope and c is the speed of light; $f_{r2}$ denotes a second domain range frequency, defined as

$$f_{r2} = \frac{2k_f}{c}$$; $\lambda_0$ is the wavelength of the first chirp in a frame; and $n$ is the chirp index.

In other features, the stepped frequency waveform of the radar signals of the $N$ radar chirps are generated to conform to the following condition:

$$\frac{f_{r1} T_N}{2} + s_c \frac{2}{\lambda_{N/2}} = 0.$$

In other features, the at least one processor and memory are further configured to determine whether $s_c s_f$ is greater than 0 and whether $s_c$ is less than 0 and, in response to $s_c s_f$ being greater than 0 and $s_c$ being less than 0, to unfold an index for the second domain FFT.

In other features, the at least one processor and memory are further configured to determine whether $s_c s_f$ is positive or negative and perform a downshift of a Doppler spectrum of the Doppler FFT values based on whether $s_c s_f$ is positive or negative.

In other features, the at least one processor and memory are further configured to perform an expansion of the Doppler spectrum based on a number of times a range frequency of the first domain FFT has been folded, $K$.

In other features, the at least one processor and memory are further configured to calculate $K$ based on the following equation:

$$K = floor\left(\frac{idx_1 \times r_1 Bin}{r_2 Max}\right),$$

wherein $r_2 Max = \frac{c}{2\Delta f}$ represents a maximum coverage of the second domain range, $r_1 Bin$ is a bin size of the first domain range, and $\Delta f$ corresponds to a frequency offset between radar chirps of the $N$ radar chirps.

In other features, the at least one processor and memory are configured to generate the stepped frequency waveform of the $N$ radar chirps such that the initial transmit frequency and the end transmit frequency of each radar chirp after a first radar chirp are lower than the initial transmit frequency and the end transmit frequency, respectively, of an immediately preceding radar chirp.

In other features, the radar system is installed in a vehicle having at least one vehicle system, the at least one processor and memory are configured to communicate the estimate of the range and the velocity of the target to the at least one vehicle system, and the at least one vehicle system is configured to control at least one of a steering system, a braking system, a throttle system, or a driver alert and warning system based on the estimate of the range and the velocity of the target.

A method is also provided and includes: transmitting, with at least one processor and memory of a radar system, radar signals within a frame having $N$ radar chirps, the $N$ radar chirps having a stepped frequency waveform such that an initial transmit frequency and an end transmit frequency are changed for each subsequent chirp within the $N$ radar chirps, and with $N$ being greater than 1; receiving and sampling, with an analog-to-digital converter of the radar system, radar signals reflected from a target to generate receive values from the received and sampled radar signals; performing, with the at least one processor and memory, range fast Fourier transform (FFT) processing, including a first domain FFT, and Doppler FFT processing, including a second domain FFT, on the receive values to generate range FFT values and Doppler FFT values; estimating, with the at least one processor and memory, a range and a velocity of the target based on the range FFT values and Doppler FFT values, wherein the estimated range, $r$, and the estimated velocity, $v$, of the target are calculated based on at least one equation that includes (i) a first term corresponding to a target range, $r_o$, measured by a first radar chirp of the $N$ radar chirps, and (ii) a second term corresponding to a center wavelength, $\lambda_{N/2}$, of the plurality of radar chirps of the frame.

In other features, the at least one equation further includes a third term corresponding to an average range measurement from all $N$ radar chirps within the frame, $r_0 - \dfrac{vT_N}{2}$, where $T_N$ corresponds to the transmitting time of each chirp.

In other features, the at least one equation includes the following equations:

$$F_1 = f_{r1}\left(r_0 - \frac{vT_N}{2}\right) - s_c\frac{2v}{\lambda_{N/2}}$$

$$F_2 = s_c s_f f_{r2} r_0 - s_c\frac{2v}{\lambda_0}$$

wherein: $F_1$ and $F_2$ represent frequencies measured after the first and second domain FFTs, respectively; $s_c$ and $s_f$ represent directions of the chirp and frame slope, respectively; $f_{r1}$ represents a first domain range frequency, defined as $f_{r1} = \dfrac{2k_c}{c}$, where $k_c$ is a chirp slope and c is the speed of light; $f_{r2}$ denotes a second domain range frequency, defined as $f_{r2} = \dfrac{2k_f}{c}$; $\lambda_0$ is the wavelength of the first chirp in a frame; and $n$ is the chirp index.

In other features, the stepped frequency waveform of the radar signals of the $N$ radar chirps are generated to conform to the following condition:

$$\frac{f_{r1}T_N}{2} + s_c\frac{2}{\lambda_{N/2}} = 0.$$

In other features, the method further includes determining whether $s_c\,s_f$ is greater than 0 and whether $s_c$ is less than 0 and, in response to $s_c\,s_f$ being greater than 0 and $s_c$ being less than 0, unfolding an index for the second domain FFT.

In other features, the method further includes determining whether $s_c\,s_f$ is positive or negative and performing a downshift of a Doppler spectrum of the Doppler FFT values based on whether $s_c\,s_f$ is positive or negative.

In other features, the method further includes performing an expansion of the Doppler spectrum based on a number of times a range frequency of the first domain FFT has been folded, $K$.

In other features, the method further includes calculating $K$ based on the following equation:

$$K = floor\left(\frac{idx_1 \times r_1 Bin}{r_2 Max}\right),$$

wherein $r_2 Max = \dfrac{c}{2\Delta f}$ represents a maximum coverage of the second domain range, $r_1 Bin$ is a bin size of the first domain range, and $\Delta f$ corresponds to a frequency offset between radar chirps of the $N$ radar chirps.

In other features, the method further includes generating the stepped frequency waveform of the $N$ radar chirps such that the initial transmit frequency and the end transmit frequency of each radar chirp after a first radar chirp are lower than the initial transmit frequency and the end transmit frequency, respectively, of an immediately preceding radar chirp.

In other features, the radar system is installed in a vehicle having at least one vehicle system, the method further comprising communicating the estimate of the range and the velocity of the target to the at least one vehicle system, and the at least one vehicle system is configured to control at least one of a steering system, a braking system, a throttle system, or a driver alert and warning system based on the estimate of the range and the velocity of the target.

Further areas of applicability will become apparent from the description provided herein. The description and specific examples in this summary are intended for purposes of illustration only and are not intended to limit the scope of the present disclosure.

DRAWINGS

The drawings described herein are for illustrative purposes only of selected embodiments, not all possible implementations, and are not intended to limit the scope of the present disclosure.

FIG. 1 is a block diagram of a vehicle having a radar system in accordance with the present disclosure.

FIG. 2 is another block diagram of a vehicle having a radar system in accordance with the present disclosure.

FIG. 3 is a graph illustrating transmitted radar signal chirps within a frame having a Frequency Modulated Continuous Waveform (FMCW) where all chirps have the same central frequency.

FIG. 4 is a graph illustrating a stepped frequency waveform of transmitted radar signal chirps within a frame.

FIG. 5 is a diagram illustrating a two-dimensional matrix of return signal samples, first dimension fast Fourier transform (FFT) bins, and second dimension FFT bins for received radar signals.

FIG. 6 illustrates velocity estimation errors of prior systems.

FIG. 7 illustrates range estimation errors of prior systems.

FIG. 8 illustrates reduced velocity estimation errors resulting from the systems and methods of the present disclosure.

FIG. 9 illustrates reduced range estimation errors resulting from the systems and methods of the present disclosure.

FIG. 10 illustrates a down-chirp waveform of transmitted radar signals.

FIG. 11 illustrates reduced velocity estimation errors resulting from using waveform constraints in accordance with the present disclosure.

FIG. 12 illustrates reduced range estimation errors resulting from using waveform constraints in accordance with the present disclosure.

FIG. 13 illustrates a zero Doppler index for each range bin in accordance with the present disclosure.

FIG. 14 illustrates unfolding a second domain indices in accordance with the present disclosure.

FIG. 15 illustrates the unfolded aliased range frequency when the chirp slope multiplied by the frame slope is positive, in accordance with the present disclosure.

FIG. 16 illustrates an example of positive and negative index regions within a single block after Doppler expansion, in accordance with the present disclosure.

FIG. 17 illustrates a shifting technique in accordance with the present disclosure.

FIG. 18 illustrates a flowchart for a comprehensive framework for processing waveform variations in accordance with the present disclosure.

Corresponding reference numerals indicate corresponding parts throughout the several views of the drawings.

DETAILED DESCRIPTION

Example embodiments will now be described more fully with reference to the accompanying drawings.

The present disclosure provides methodologies, procedures, and conditions for improving the accuracy of estimating range and velocity of objects using radar systems that transmit radar signals by changing a frequency of radar chirps within a transmit frame according to a stepped-frequency waveform.

In a first aspect of the present disclosure, new equations are provided for estimating range and velocity that reduce range and velocity estimation errors due to range migration, as discussed in further detail below.

In a second aspect of the present disclosure, waveform constraints and conditions are provided that reduce range and velocity estimation errors due to Doppler aliasing errors, as discussed in further detail below.

In a third aspect of the present disclosure, a comprehensive framework is provided for processing of the four different combinations of stepped-frequency waveforms, i.e., up-chirp up-frame, down-chirp up-frame, up-chirp down-frame, and down-chirp down-frame. As discussed in further detail below, the comprehensive framework can provide a process and methodology by which expands the Doppler indices, i.e., second domain indices, based on range information and unfolds the Doppler indices based on the positive and negative velocity coverage, as discussed in further detail below.

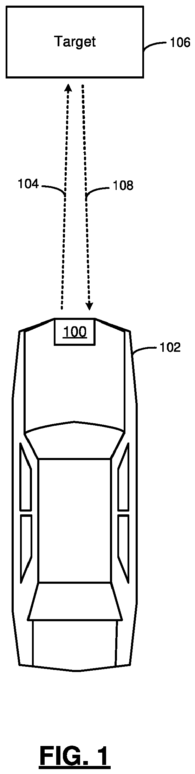

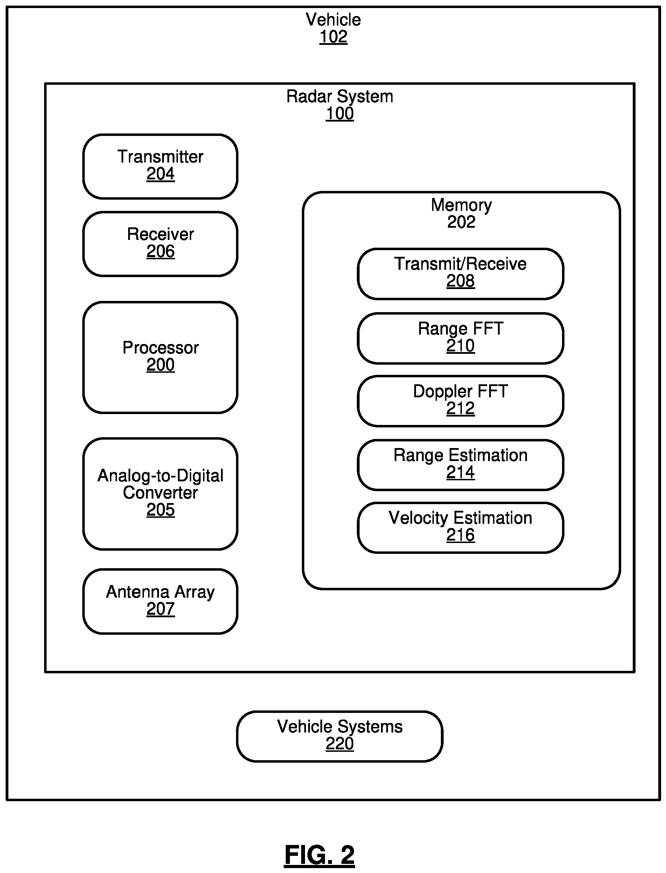

With reference to FIGS. 1 and 2, a radar system 100 of a vehicle 102 in accordance with the present disclosure is shown. The radar system 100 transmits signals 104 that are reflected off of an object or target 106 in the environment of the vehicle 102. While a single target 106 is shown for purposes of illustration in FIG. 1, in practice the target 106 may comprise multiple objects. The radar system 100 receives signals 108 that are reflected from the target 106. Based on characteristics of the received signals 108, the radar system 100 determines information about the target 106, such as range and velocity, which is subsequently used to determine other information about the target 106, such the target's location, size, orientation, velocity, acceleration, etc.

The radar system 100 includes a processor 200 and memory 202 that stores code executed by the processor 200 to perform the required functionality for transmitting, receiving, and processing signals 104, 108 and determining the information about the target 106, such as range and velocity, based on the characteristics of the received signals 108. While the example implementation illustrates a single processor 200, multiple processors and/or modules working together can alternatively be used. The radar system 100 includes a transmitter 204 that transmits the signals 104 and a receiver 206 that receives the signals 108 using an antenna array 207. The antenna array 207 includes one or more transmit (TX) antennas and one or more receive (RX) antennas for transmitting and receiving signals 104, 108. The processor 200, for example, executes transmit/receive code 208 stored in the memory 202 to control the transmitter 204 and receiver 206 to transmit and receive the signals 104, 108 using the antenna array 207. The memory 202 also stores code 210 used by the processor 200 to perform a first-domain range fast Fourier transform (FFT) and code 212 to perform a second-domain Doppler FFT on received radar signals 108 208. For example, the processor 200 performs range FFT using the range FFT code 210 to generate a first-domain range index and performs Doppler FFT using the Doppler FFT code 212 to generate a second-domain Doppler index. The processor 200 then uses range estimation code 214 and velocity estimation code 216 to process the range and Doppler indices to determine the range and velocity, respectively, of the target 106, in accordance with the present disclosure. The processes and methods utilized by the range estimation code 214 and velocity estimation code 216 executed by the processor 200 in accordance with the present disclosure are discussed in further detail below.

The processor 200 can communicate the determined information about the target 106, such as the location, size, orientation, velocity and acceleration of the target 106 determined based on the range and velocity information, to other vehicle systems 220, such as autonomous driving systems and/or advanced driver assistance systems (ADAS), such as automatic cruise control systems, blind spot monitoring systems, etc. The other vehicle systems 220 can then utilize and process the information about the target 106 to appropriately control steering systems, braking systems, throttle systems, driver alert and warning systems, and/or other systems of the vehicle 102 based on the information about the target 106.

The radar system 100 also includes an analog-to-digital converter (ADC) 205 used to sample the received radar signal 108 using a specified sample rate and to convert analog information about the received radar signals, such as a receive frequency, to a digital format. The ADC 205 can be implemented using a separate processor, multiple processors, and/or a separate module configured to perform analog-to-digital radar signal processing in accordance with the present disclosure.

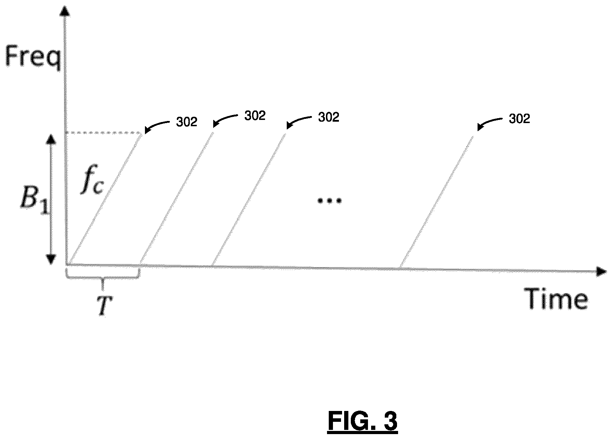

Prior radar systems have used a Frequency Modulated Continuous Waveform (FMCW) technique to determine the range, velocity, and angle or orientation of objects in the environment of the vehicle. FIG. 3, for example, illustrates **Fehler! Verweisquelle konnte nicht gefunden werden.**an FMCW waveform, comprising multiple chirps 302 within a single frame. Here $f_c$ represents the central frequency for all chirps 302 within the frame. The frequency bandwidth of each chirp is denoted by $B_1$ and the Pulse Repetition Time (PRT), or the time period between each chirp, is shown as $T$. The chirp slope is defined as $k_c = B_1/T$. In the Example of FIG. 3, the central frequency of each chirp remains constant within the frame.

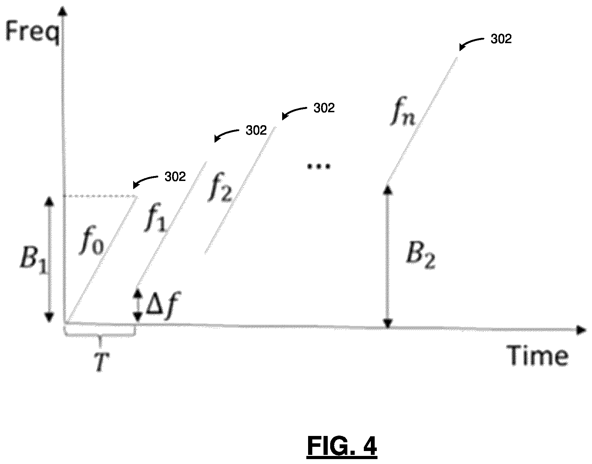

With reference to FIG. 4, a stepped-frequency waveform is illustrated wherein the initial starting frequency and the final ending frequency of each chirp 302 changes from chirp to chirp. As shown in FIG. 4, $\Delta f$ indicates the center frequency offset between adjacent chirps 302. Similar to the chirp slope of the conventional FMCW, the frame slope of the stepped-frequency waveform can be determined as $k_f = \Delta f/T$. When $\Delta f$ is zero, the stepped-frequency waveform reverts to the conventional FMCW waveform illustrated in FIG. 3. For the sake of clarity and without sacrificing general applicability, the present disclosure discusses and describes the use of a stepped-frequency waveform for radar signal processing.

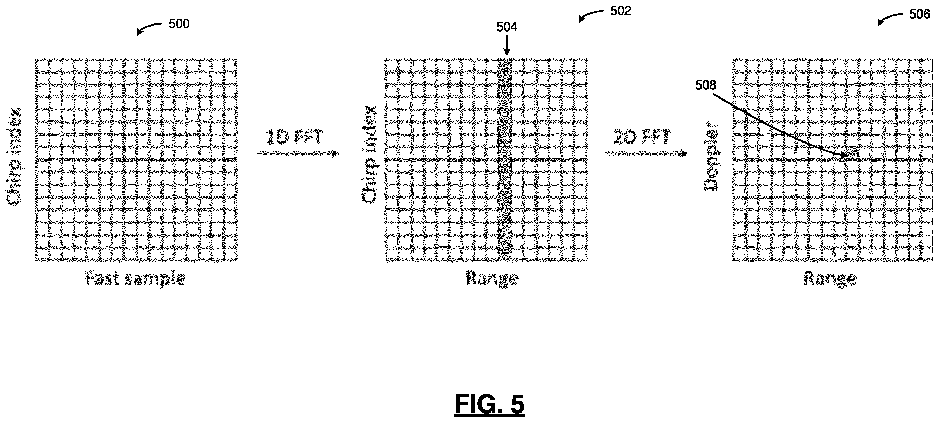

After a transmitted signal 104 is reflected back from the target, the return signal 108 is sampled by the ADC at a sample rate of $f_s$, forming a two-dimensional matrix 500, shown in FIG. 5. Each row in the matrix 500 corresponds to the ADC samples collected from a chirp within one frame. In other words, the matrix 500 having x columns and y rows corresponds to the results of the ADC taking x samples for each of y chirps within a frame. The row index corresponds to the chirp index indicating the chirp from which the ADC samples for that row were obtained. To determine a target's range and velocity using the stepped-frequency FMCW method, the processor 200 executes the range FFT code 210 to determine a first dimension FFT (or 1D FFT), which generates the bins represented at 502. The resulting bins of 502 are indexed by chirp and range indices. Further, a particular range index 504 within in each chirp of the frame illustrates a prominent peak at that index within the chirps and corresponds to the estimated range of the target. The processor 200 also executes the Doppler FFT code 212 to perform a second dimension FFT (or 2D-FFT), which generates the bins represented at 506, on the ADC data cube. The resulting bins at 506 are indexed by a Doppler index and a range index. The result of the second dimension FFT reveals a prominent peak at 508 with higher amplitude, distinguishing it from adjacent low-amplitude noise bins. The object's range and velocity can then be calculated based on the location of the peak. In prior systems, such as the system described in EP3796038, titled "Object Range and Velocity Detection from Varying Radar Pulse Repetition Times, which is incorporated herein by reference, Equations 1 and 2 are used to estimate a target's range and velocity:

$$F_1 = f_{r1}r - s_c \frac{2v}{\lambda_0} \qquad \text{Equation 1}$$

$$F_2 = f_{r2}r - s_f \frac{2v}{\lambda_0} \qquad \text{Equation 2}$$

wherein $F_1$ and $F_2$ represent the frequencies measured after the first and second domain FFTs, respectively, the parameters $r$ and $v$ denote the target's range and Doppler velocity, $\lambda_0$ corresponds to the wavelength of the first chirp in the frame, and $s_c$ and $s_f$ represent the directions of the chirp and frame slopes. When the chirp slope is positive, $s_c$ is assigned a value of 1, otherwise $s_c$ is assigned a value -1. Similarly, when the frame slope is positive, $s_f$ is assigned a value of 1, otherwise $s_f$ is assigned a value of -1. The term $f_{r1}$ refers to the first domain range frequency, defined as $f_{r1} = \frac{2k_c}{c}$ , where $k_c$ is the chirp slope and c represents the speed of light. By utilizing $f_{r1}$, the target's range, $r$, is transformed into a frequency value measured within the first domain. Similarly, $f_{r2}$ denotes the second domain range frequency, defined as

$$f_{r2} = \frac{2k_f}{c}$$ .

Given that $F_1$ and $F_2$ from Equations 1 and 2 can be derived from the location of the target peak following the 2D FFT, and all other parameters are fixed and determined by the waveform, it becomes straightforward for the processor 200 to calculate the unknown parameters, range $r$ and velocity $v$ of the target, using Equations 1 and 2.

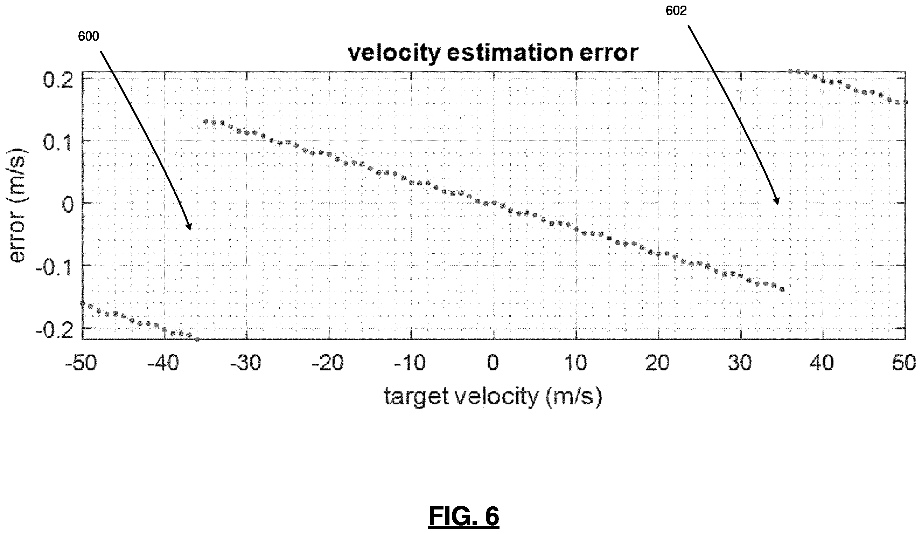

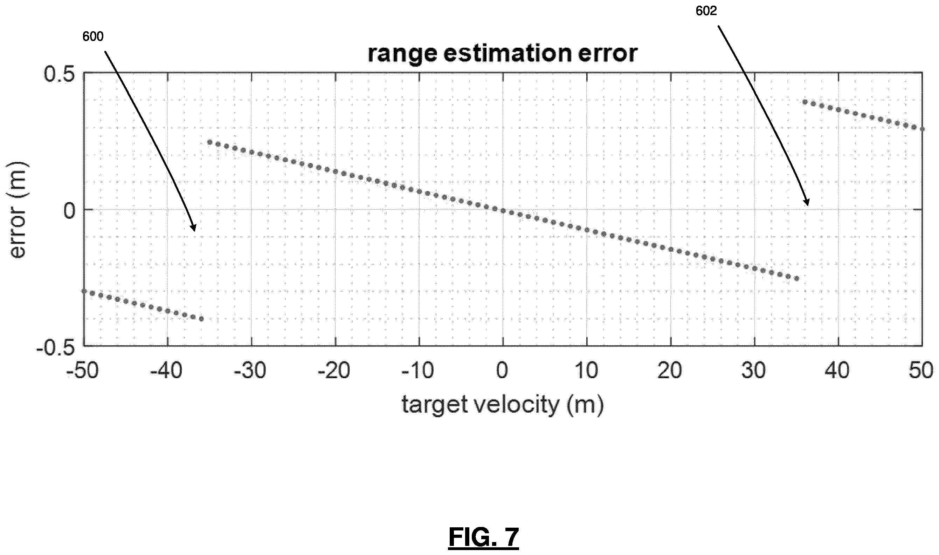

In scenarios where the target's velocity is relatively low, Equations 1 and 2 yield satisfactory accuracy for both range and velocity estimation. However, when the target exhibits faster motion as velocity increases, the measured range varies significantly for each chirp, leading to substantial errors if a constant target range is assumed. This phenomenon, known as range migration, introduces errors in both range and velocity estimation with systems and methods that use Equations 1 and 2. FIGs. 6 and 7 illustrate examples of the range and velocity estimation errors caused by range migration. As shown in FIGs. 6 and 7, as the target velocity increases, the accuracy of the estimations in both range and velocity deteriorates.

In addition to the range and velocity estimation errors resulting from range migration, FIGs. 6 and 7 each also illustrate two distinct discontinuity points 600 and 602 present in the estimation results. These "jumping" errors occur when the velocity measurement becomes aliased. For example, when the target's Doppler velocity is aliased, the velocity measurement becomes wrapped and inaccurate. Despite the availability of multiple techniques for unwrapping the aliased Doppler velocity, the methods can only be applied after the initial incorrect wrapped velocity is calculated. Since Equations 1 and 2 assume that the measurements are unaliased, a wrapped velocity introduces an offset in both range and velocity.

As noted above, prior systems using Equations 1 and 2 have two major drawbacks. First, the presence of range migration leads to increased errors in both range and velocity measurements as the target's velocity increases. Second, when the Doppler velocity becomes aliased, the utilization of a wrapped velocity introduces an additional offset in both range and velocity measurements.

### *New Range and Velocity Equations*

To overcome these limitations and drawbacks of the prior systems, the present disclosure includes the use of equations that address these limitations and drawbacks and minimize the above-noted errors for range and velocity calculations. The present disclosure additionally provides waveform conditions and constraints for a stepped frequency waveform to further decrease and minimize errors. In particular, in place of Equations 1 and 2, systems and methods of the present disclosure utilize Equations 3 and 4:

$$F_1 = f_{r1}\left(r_0 - \frac{vT_N}{2}\right) - s_c\frac{2v}{\lambda_{N/2}} \qquad \text{Equation 3}$$

$$F_2 = s_c s_f f_{r2} r_0 - s_c\frac{2v}{\lambda_0} \qquad \text{Equation 4}$$

wherein:

- $F_1$ and $F_2$ represent the frequencies measured after the first and second domain FFTs, respectively;
- $s_c$ and $s_f$ represent the directions of the chirp and frame slope, respectively (as described above);
- $f_{r1}$ refers to the first domain range frequency, defined as $f_{r1} = \frac{2k_c}{c}$ , where $k_c$ is the chirp slope and c represents the speed of light (as described above);
- $f_{r2}$ denotes the second domain range frequency, defined as $f_{r2} = \frac{2k_f}{c}$ (as described above),

- $r_0$ is the target range measured by the first chirp of the frame;
- $v$ is the target's Doppler velocity;
- $\lambda_{N/2}$ is the frame's center wavelength;
- $\lambda_0$ is the wavelength of the first chirp in a frame;
- $T_n$ is the transmitting time of each chirp; and
- $n$ is the chirp index.

Equations 3 and 4 differ from Equations 1 and 2 in several respects. For example, in Equations 3 and 4, the target range measured by the first chirp, denoted as $r_0$, is utilized instead of an unspecified target range $r$, as in Equations 1 and 2. In addition, Equations 3 and 4 utilize and reference the frame's center wavelength, $\lambda_{N/2}$, instead of just the wavelength of the first chirp in the farm, $\lambda_0$, as in Equations 1 and 2.

In further contrast to Equations 1 and 2, Equations 3 and 4 take into account the influence of range migration and the variation in wavelength among chirps within the stepped-frequency waveform. For example, assuming a target moves at a constant speed within one frame, the range measurement from each chirp can be expressed as $r_0 - vT_n$. Then, the target range measured by the entire frame is the averaged range value measured by all chirps given as: $r_0 - \dfrac{vT_N}{2}$. Thus, utilizing the averaged range measurement from each chirp provides a more accurate representation of the real-world scenario. The same principle applies to the Doppler frequency in the first domain. Since each chirp possesses a different wavelength, the averaged Doppler frequency is represented in Equations 3 and 4 as $2v/\lambda_{N/2}$, instead of $2v/\lambda_0$ as used in Equations 1 and 2.

In this way, radar systems and methods using Equations 3 and 4 provide more accurate range and velocity measurements of a target, as compared with systems and methods that use Equations 1 and 2.

### Mathematical Proof for Equations 3 and 4

This section presents the mathematical proof supporting Equations 3 and 4.

The linear frequency modulated waveform can be defined according to Equation 5:

$$s_{i,n} = \exp\left[j2\pi\left(s_c \frac{B}{2T_0} t_i^2 + f_n t_i\right)\right], 0 < i < m, 0 < n < N \qquad \text{Equation 5}$$

wherein $t_i = i/f_s$ represents ADC sampling time, $f_n = f_0 + n\Delta f$ denotes the center frequency of each chirp. The received signal reflected from the target is represented according to Equation 6:

$$r_{i,n} = \exp\left[j2\pi\left(s_c \frac{B}{2T_0}\left(t_i - \tau_{i,n}\right)^2 + f_n\left(t_i - \tau_{i,n}\right)\right)\right] \qquad \text{Equation 6}$$

wherein $\tau_{i,n} = 2r_{i,n}/c$ is the time delay for each fast sample, $t_i$. The target range is given by $r_{i,n} = r_0 - vT_n - vt_i$, where $T_n = \dfrac{f_0}{f_n} nT_0$ represents the chirp timing, which is described in further detail in EP3796038. In the receiver, the transmitted signal is conjugated and multiplied with the received signal as Equation 7:

$$s_{i,n}^* \times r_{i,n} = \exp\left[-j2\pi\left(s_c \frac{B}{2T_0} t_i^2 + f_n t_i\right)\right.$$
$$\left. + j2\pi\left(s_c \frac{B}{2T_0}\left(t_i - \tau_{i,n}\right)^2 + f_n\left(t_i - \tau_{i,n}\right)\right)\right] \qquad \text{Equation 7}$$

Through several cancellations, Equation 7 can be represented as Equation 8:

$$\exp\left\{j2\pi\left[\frac{s_c B}{2T_0}\left(-2t_i\tau_{i,n}+\tau_{i,n}^2\right)-f_n\tau_{i,n}\right]\right\}$$   Equation 8

Considering that the quadratic phase delay $\tau_{i,n}^2$ is relatively small and can be ignored, Equation 8 can be further simplified as Equation 9:

$$\exp\left\{-j2\pi\left[\frac{s_c B t_i \tau_{i,n}}{T_0}+f_n\tau_{i,n}\right]\right\}$$   Equation 9

Replacing $\tau_{i,n}$ with $r_0$ - $vT_n$ - $vt_i$ in Equation 9, yields Equation 10:

$$\exp\left\{-j2\pi\left[\frac{s_c B 2(r_0 t_i - vT_n t_i - vt_i^2)}{cT_0}+\frac{2f_n(r_0 - vT_n - vt_i)}{c}\right]\right\}$$   Equation 10

If the quadratic term $vt_i^2$ is neglected and $f_n = f_0 + ns_f\Delta f$ and $T_n = \frac{f_0}{f_n}nT_0$ are used in Equation 10, the equation can then be represented as Equation 11:

$$\exp\left\{-j2\pi\left[\frac{s_c B t_i 2(r_0 - vT_n)}{cT_0}+\frac{2r_0 f_0}{c}+\frac{2nr_0 s_f\Delta f}{c}-\frac{2vf_0 nT_0}{c}\right.\right.$$
$$\left.\left.-\frac{2f_n vt_i}{c}\right]\right\}$$   Equation 11

The term $2r_0f_0/c$ in Equation 11 is a constant term and can be disregarded. By using $f_{r1}=\frac{2B}{cT}$ and $f_{r2}=\frac{2\Delta f}{cT}$, Equation 11 can be further simplified as Equation 12:

$$\exp\left\{-j2\pi\left[s_c f_{r1}(r_0 - vT_n)t_i + \frac{2nr_0 s_f\Delta f}{c}-\frac{2vnT_0}{\lambda_0}-\frac{2vt_i}{\lambda_n}\right]\right\}$$
$$= \exp\left\{j2\pi\left[\left[-s_c f_{r1}(r_0 - vT_n)+\frac{2v}{\lambda_n}\right]t_i\right.\right.$$   Eq.12
$$\left.\left.+\left[-s_f f_{r2}r_0 + \frac{2v}{\lambda_0}\right]nT_0\right]\right\}$$

Since $t_i$ is the fast time (referring to the frequency and time scale at which individual samples are made within a chirp) and $nT_0$ is the slow time (referring to the frequency and time scale of the frame of chirps as a whole), the first and second domain frequency associated with each chirp are represented by Equation 13 and Equation 14, respectively.

$$F_{1,n}=-s_c f_{r1}(r_0 - vT_n)+\frac{2v}{\lambda_n}$$   Equation 13

$$F_{2,n}=-s_f f_{r2}r_0 + \frac{2v}{\lambda_0}$$   Equation 14

To the simplify the equations, the first domain frequency can be made non-negative by multiplying $-s_c$ into Equation 12, resulting in Equations 15 and 16:

$$F_{1,n} = f_{r1}(r_0 - vT_n) - s_c \frac{2v}{\lambda_n} \qquad \text{Equation 15}$$

$$F_{2,n} = s_c s_f f_{r2} r_0 - s_c \frac{2v}{\lambda_0} \qquad \text{Equation 16}$$

The first domain frequency measured by each chirp, as defined in Equation 15, undergoes averaging after a 2D FFT, leading to a final detection with the frequency given by Equation 17:

$$F_{1,n} \approx F_1 = f_{r1}\left(r_0 - \frac{vT_N}{2}\right) - s_c \frac{2v}{\lambda_{N/2}} \qquad \text{Equation 17}$$

It is evident that Equation 16 remains constant regardless of the chirp index $n$. Then Equation 16 can be expressed as Equation 18:

$$F_2 = s_c s_f f_{r2} r_0 - s_c \frac{2v}{\lambda_0} \qquad \text{Equation 18}$$

### Range and Velocity Error Reductions

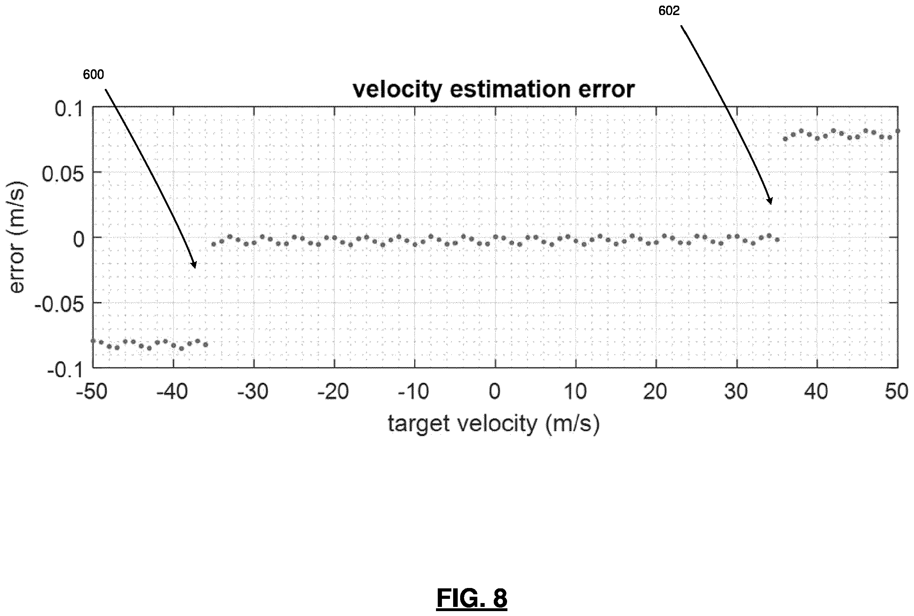

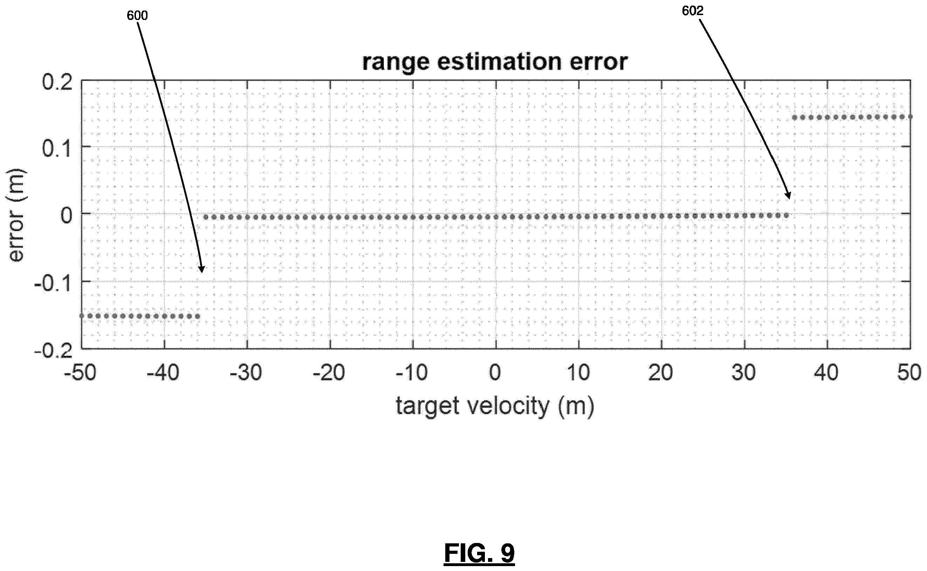

Figures 8 and 9 show the results and reduced errors obtained when using Equations 3 and 4. A sizeable reduction in the range and velocity errors can be observed, as compared to the errors illustrated in Figures 6 and 7. Some estimation/jumping errors resulting from the aliased Doppler velocity, however, persist, as shown at 600 and 602.

### Mitigation and Reduction of "Jumping" Errors

This section describes waveform constraints and conditions for a stepped-frequency waveform that mitigate and reduce the "jumping" errors discussed above.

Equations 3 and 4 can be rewritten as Equations 19 and 20, as follows:

$$F_1 = f_{r1} r_0 - \left(\frac{f_{r1} T_N}{2} + s_c \frac{2}{\lambda_{N/2}}\right) v \qquad \text{Equation 19}$$

$$F_2 = s_c s_f f_{r2} r_0 - s_c \frac{2v}{\lambda_0} \qquad \text{Equation 20}$$

When Doppler aliasing occurs, the Doppler velocity becomes folded in M times. Consequently, there is a difference between the folded velocity and the measured velocity, given by $V_{un}M$, where $V_{un}$ represents the maximum unambiguous velocity supported by the waveform. Utilizing Equations 19 and 20, the range error can be expressed according to Equation 21:

$$\epsilon_{rng} = \left(\frac{f_{r1} T_N}{2} + s_c \frac{2}{\lambda_{N/2}}\right) V_{un}M \div f_{r1} \qquad \text{Equation 21}$$

Similarly, the velocity error can be calculated according to Equation 22:

$$\epsilon_{vel} = -s_f \epsilon_{rng} f_{r2} \frac{\lambda_0}{2} \qquad \text{Equation 22}$$

From Equations 21 and 22, it is evident that both the range and velocity errors can be reduced to zero if the waveform parameters satisfy the condition outlined in Equation 23:

$$\frac{f_{r1} T_N}{2} + s_c \frac{2}{\lambda_{N/2}} = 0 \qquad \text{Equation 23}$$

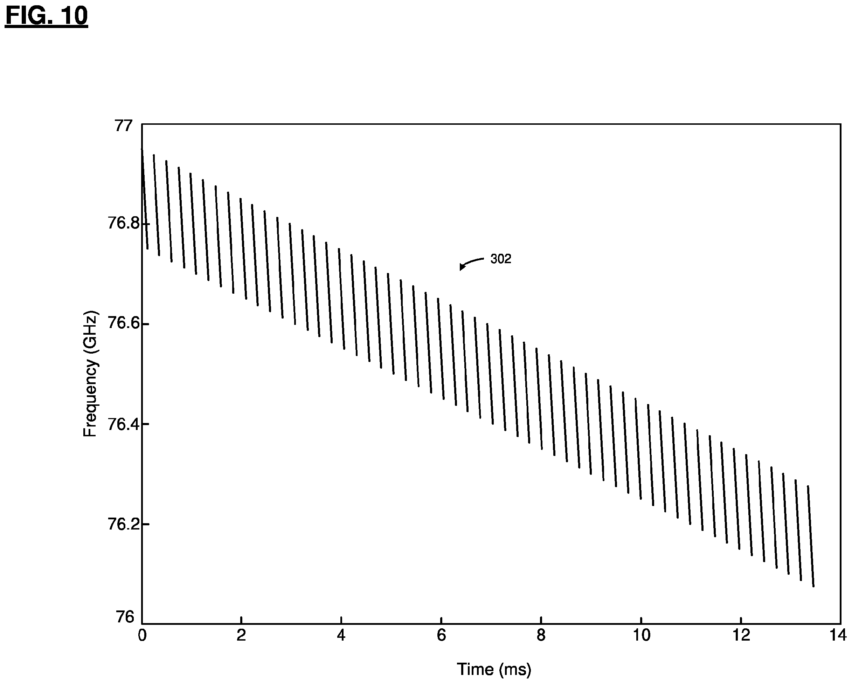

The waveform condition of Equation 23 implies that a down-chirp waveform is necessary to eliminate the estimation errors caused by Doppler aliasing. FIG. 10 illustrates a down-chirp waveform, wherein the frequency of each chirp decreases over the time period of the chirp. The waveform of FIG. 10 also illustrates a down-frame waveform, wherein the initial frequency and end frequency of each subsequent chirp is lower than the initial frequency and end frequency of the previous chirp within the frame.

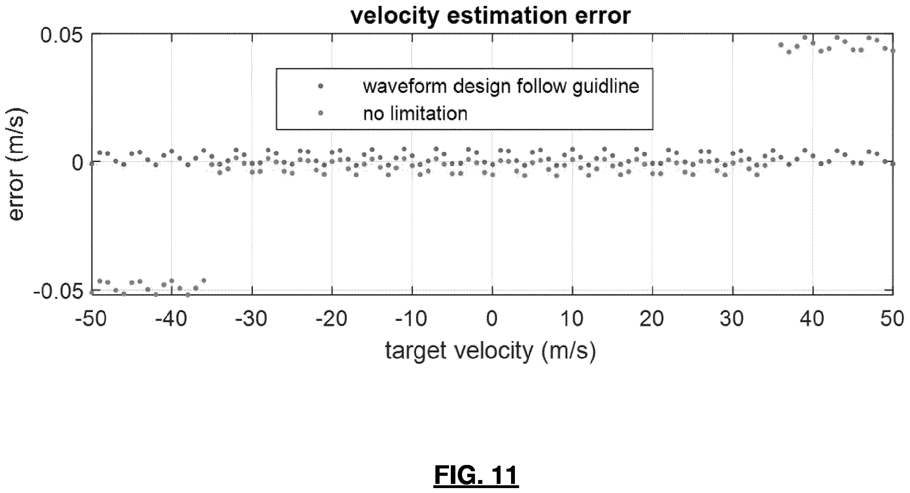

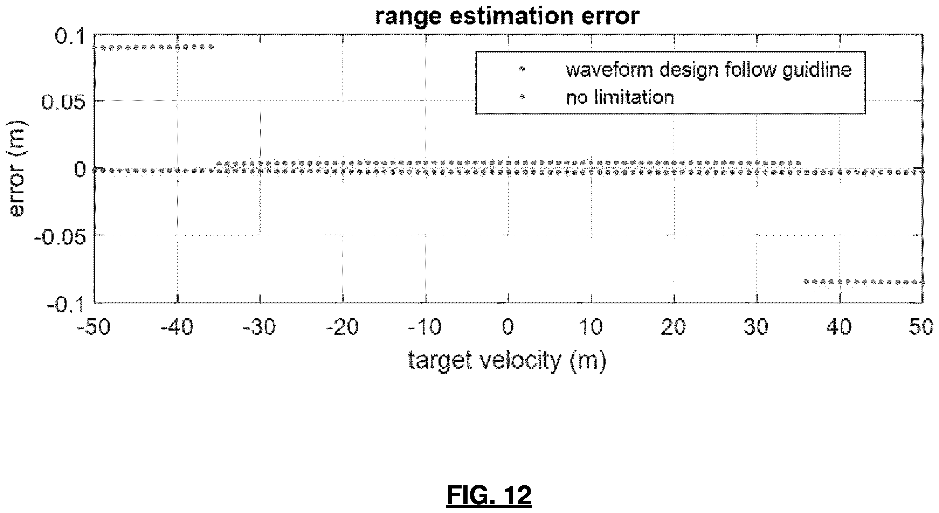

FIGs. 11 and 12 illustrate the range and velocity estimation errors when the stepped-frequency waveform adheres to the condition specified above in Equation 23, as compared with a waveform that does not adhere to the condition of Equation 23. Notably, both the velocity and range errors are significantly reduced compared to the errors shown in FIGs. 6-9. In addition, the "jumping" errors illustrated in the previous Figures have been eliminated. In this way, following the waveform design condition/constraint of Equation 23 significantly reduces the range and velocity calculation errors as compared with using Equations 3 and 4 without imposing the waveform design condition/constraint of Equation 23**Fehler! Verweisquelle konnte nicht gefunden werden.**.

### Calculating Second Domain Index

Another benefit of the methods for calculating range and velocity of the present disclosure is the streamlined and adaptable method for calculating the second domain index.

In Equations 19 and 20, the unknown values of $r_0$ and $v$ are to be determined, while the other parameters are either predefined by the waveform or obtained from measurements. The quantities $F_1$ and $F_2$ can be derived from the target's indices ($idx_1, idx_2$) after performing a 2D FFT. Specifically, $F_1$ corresponds to the first domain index and can be calculated using the equation:

$$F_1 = idx_1 \times f_1\, Bin \qquad \text{Equation 24}$$

where, $f_1 Bin$ represents the first domain frequency bin size, defined as $f_1 Bin = f_s/N_{fft1}$, where $N_{fft1}$ is the first domain FFT size. On the other hand, calculating the value of $F_2$ is more complex, as it depends on the relationship between the second domain range and the Doppler frequency under different conditions. In this section the example of a stepped-frequency waveform with $s_c s_f > 0$, along with another example, to illustrate how $F_2$ can be determined.

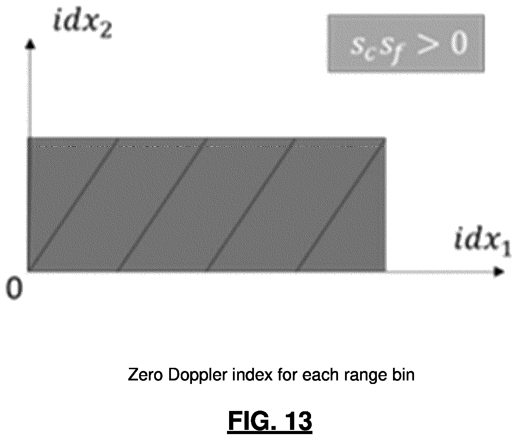

To ascertain the value of $F_2$, the pattern of zero Doppler index must be ascertained for each range bin. When $s_c s_f > 0$ and $v = 0$, a positive value of $F_2$ would be observed, resulting in the formation of multiple diagonal lines with a positive slope, as illustrated in FIG. 13, which depicts a zero Doppler index for each range bin. However, due to the limited frequency range in the second domain, any second domain range frequency exceeding the unambiguous frequency will cause aliasing, leading to the creation of multiple diagonal lines instead of a single line. To unfold the aliased range frequency, the number of times the range has been folded must be determined for each range bin. This folded times value, denoted as $K$, can be calculated according to Equation 25:

$$K = floor\left(\frac{idx_1 \times r_1 Bin}{r_2 Max}\right) \qquad \text{Equation 25}$$

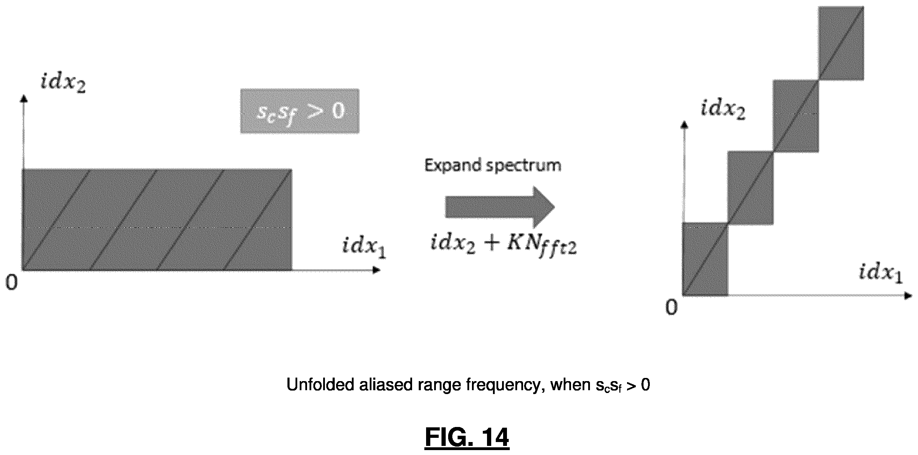

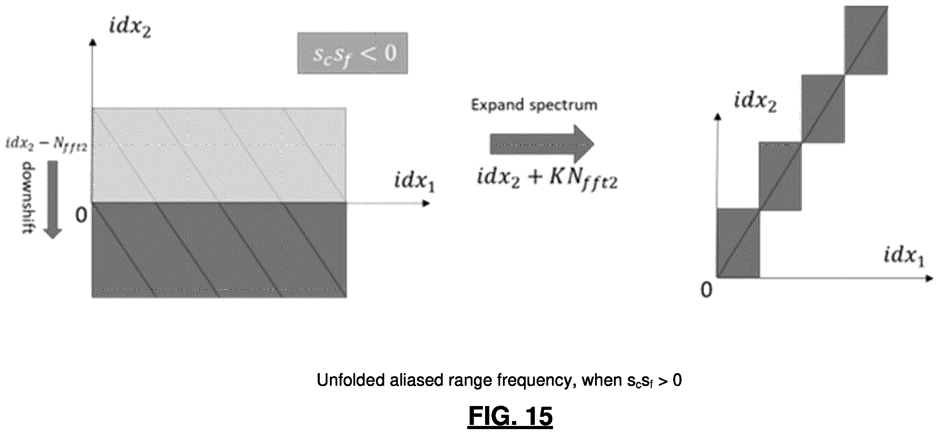

wherein $r_2 Max = \frac{c}{2\Delta f}$ represents the maximum coverage of the second domain range, and $r_1 Bin$ is the bin size of the first domain range in meters. Once the folded times, $K$, is determined, the second domain indices can be unfolded, as shown in FIG. 14. In cases where the value of $s_c s_f$ results in negative range frequencies, an additional downshift is required before expanding the spectrum, as depicted in FIG. 15. After expanding the spectrum, the zero Doppler index, $V_0$, can be calculated using Equation 26:

$$V_0 = s_c s_f \left( idx_1 \times \frac{rBin_1}{rBin_2} \right) \qquad \text{Equation 26}$$

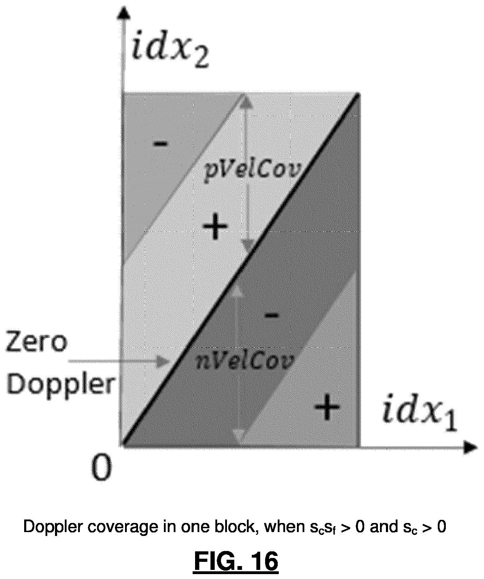

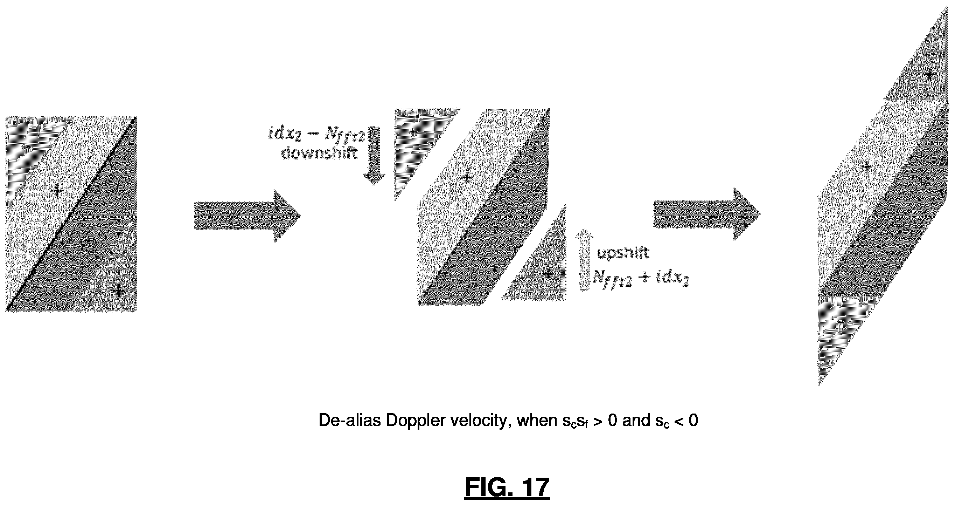

In addition to the aliased range frequency in the second domain, the Doppler frequency can also be subject to aliasing. The maximum index separation between the positive and negative Doppler frequencies and the zero Doppler index can be denoted as *pVelCov* and *nVelCov,* respectively. The combined coverage of these two regions should equal the size of the second domain FFT, i.e., *pVelCov* + *nVelCov* = $N_{fft2}$. FIG. 16 illustrates an example of the positive and negative index regions within a single block after the Doppler expansion depicted in FIG. 14. The areas denoted with "+" represent the region for positive Doppler frequencies, while the areas denoted with "-" represent the region for negative Doppler frequencies. Both the positive and negative Doppler frequency areas exhibit discontinuities and folding. For instance, the lower right area denoted with "+" below the zero Doppler index line contains folded positive Doppler frequency indices, whereas the indices within the upper left triangular area denoted with "-" belong to folded negative Doppler frequencies. Therefore, for indices located in these two triangular areas, a shifting technique needs to be applied, as illustrated in FIG. 17, to correct their positions.

### *Comprehensive Framework*

The present disclosure provides a comprehensive framework with equations and processing methods to address waveform variations, such as upchirp-upframe, downchirp-upframe, upchirp-downframe, and downchirp-downframe. The comprehensive framework of the present disclosure expands the Doppler indices based on range information and unfolds the Doppler indices based on the positive and negative velocity coverage.

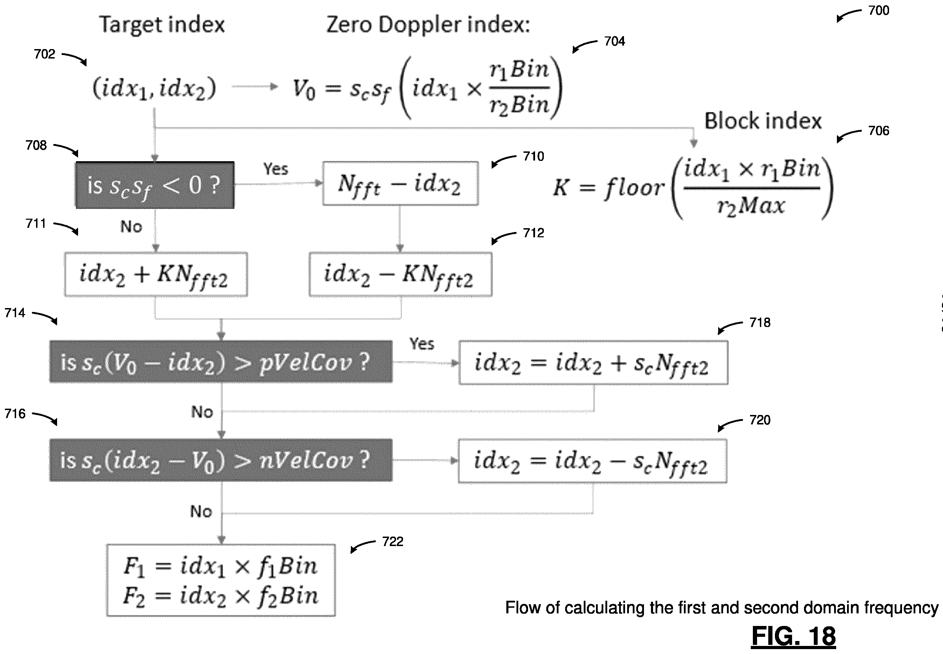

FIG. 18, for example, illustrates a flowchart for a calculation method and algorithm 700 using the comprehensive framework for calculating both the first and second domain frequencies in all four conditions of the stepped-frequency waveform: upchirp-upframe, downchirp-upframe, upchirp-downframe, and downchirp-downframe. The algorithm 700 can be executed by the processor 200 executing the range estimation code 214 and the velocity estimation code 216 stored in memory 202. At 702, the target index ($idx_1$, $idx_2$) is obtained after the 2D FFT. The target index ($idx_1$, $idx_2$) corresponds to the range and Doppler indices of the first and second domain. At 704, the zero Doppler index is calculated initially using Equation 26. At 706, the number of times the range has been folded, or block index, for the range bin, *K,* is calculated based on Equation 25. At 708, the algorithm determines whether a downshift of the Doppler spectrum is required, depending on the sign of the parameter $s_c s_f$. When $s_c s_f$ is negative, the algorithm proceeds to 710 and performs the downshift, and then proceeds to 712. At 708, when $s_c s_f$ is not negative, the algorithm proceeds to 711. At 711 and 712, an expansion of the Doppler spectrum is performed based on the value of *K*, as discussed above with reference to FIGs. 14-17. At 714 and 716, the algorithm determines whether unfolding of the second domain indices is necessary based on the offset between $idx_2$ and $V_0$, and performs unfolding of the second domain at 718 and 720, as necessary. At this stage, the corrections for the second domain indices are completed, and the algorithm proceeds to 722. At 722, $F_1$ and $F_2$ are determined by the index pair ($idx_1$, $idx_2$) and waveform parameter $f_1 Bin$ and $f_2 Bin$ . , and the corresponding target range, $r_0$, and target velocity, *v*, can be calculated by using Equations 19 and 20.

### *Conclusion*

In this way, the present disclosure provides significant advancements and technical benefits in the field of target range and velocity estimation using stepped-frequency waveforms in radar systems. In particular, the present disclosure addresses critical challenges in accurate estimation by accounting for range migration in the first domain frequency calculation and eliminating estimation errors caused by Doppler aliasing. Additionally, a comprehensive framework is provided to effectively handle different waveform conditions.

As discussed above, a first aspect of the present disclosure addresses range migration during the calculation of the first domain frequency. By addressing range migration effects, the accuracy of range estimation is significantly improved. This innovation takes into account factors such as target motion and the time delay between fast time and slow time, leading to more precise and reliable range and velocity calculations.

As further discussed above, a second aspect of the present disclosure addresses the issue of estimation errors resulting from Doppler aliasing. Doppler aliasing can introduce inaccuracies in both range and velocity estimation, leading to distorted target trajectories. The systems and methods of the present disclosure minimize and/or eliminate these errors by providing guidelines, techniques, and waveform conditions and constraints to remove the effects of Doppler aliasing. This innovation ensures more accurate velocity estimation, enhancing the overall quality of target tracking and fusion processes.

As further discussed above, the present disclosure provides a comprehensive framework that considers and handles different waveform conditions. The framework addresses waveform variations such as upchirp-upframe, down-

chirp-upframe, upchirp-downframe, and downchirp-downframe. By accounting for these diverse conditions, the framework enables more accurate frequency calculations and unfolding of indices, leading to improved estimation accuracy across various scenarios.

The results of the present disclosure provide significant enhancements in the accuracy of target range and velocity estimation compared to existing methods. These advancements have wide-ranging applications in autonomous systems, where precise target tracking and situational awareness are crucial.

The foregoing description of the embodiments has been provided for purposes of illustration and description and is not intended to be exhaustive or to limit the disclosure. Individual elements or features of a particular embodiment are generally not limited to that particular embodiment, but, where applicable, are interchangeable and can be used in another embodiment, even if not specifically shown or described. The various embodiments may also be varied in many ways. Such variations are not to be regarded as a departure from the disclosure, and all such modifications are intended to be included within the scope of the disclosure. Although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Example embodiments are provided so that this disclosure will be thorough and will fully convey the scope to those who are skilled in the art. Specific details are set forth, including examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

In the written description and claims, one or more steps within a method may be executed in a different order (or concurrently) without altering the principles of the present disclosure. Similarly, one or more instructions stored in a non-transitory computer-readable medium may be executed in different order (or concurrently) without altering the principles of the present disclosure. Unless indicated otherwise, numbering or other labeling of instructions or method steps is done for convenient reference and not to indicate a fixed order.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

The phrase "at least one of A, B, and C" should be construed to mean a logical (A OR B OR C), using a non-exclusive logical OR, and should not be construed to mean "at least one of A, at least one of B, and at least one of C." The term "set" does not necessarily exclude the empty set. The term "non-empty set" may be used to indicate exclusion of the empty set. The term "subset" does not necessarily require a proper subset. In other words, a first subset of a first set may be coextensive with (equal to) the first set.

In the figures, the direction of an arrow, as indicated by the arrowhead, generally demonstrates the flow of information (such as data or instructions) that is of interest to the illustration. For example, when element A and element B exchange a variety of information, but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are the BLUETOOTH wireless networking standard (including Core Specification versions 3.0, 4.0, 4.1, 4.2, 5.0, and 5.1 from the Bluetooth SIG) from the Bluetooth Special Interest Group (SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media.

The apparatuses and methods described in this application may be partially or fully implemented by a special purpose computer created by configuring a general-purpose computer to execute one or more particular functions embodied in computer programs. Such apparatuses and methods may be described as computerized apparatuses and computerized methods. The functional blocks and flowchart elements described above serve as software specifications, which can be translated into computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java®, Fortran, Perl, Pascal, Curl, OCaml, JavaScript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

**Claims**

1. A radar system comprising at least one processor and memory configured to:

transmit radar signals within a frame having $N$ radar chirps, the $N$ radar chirps having a stepped frequency waveform such that an initial transmit frequency and an end transmit frequency are changed for each subsequent chirp within the $N$ radar chirps, and with $N$ being greater than 1;
receive and sample radar signals reflected from a target to generate receive values from the received and sampled radar signals;
perform range fast Fourier transform (FFT) processing, including a first domain FFT, and Doppler FFT processing, including a second domain FFT, on the receive values to generate range FFT values and Doppler FFT values;
estimate a range and a velocity of the target based on the range FFT values and Doppler FFT values, wherein the estimated range, $r$, and the estimated velocity, $v$, of the target are calculated based on at least one equation that includes (i) a first term corresponding to a target range, $r_0$, measured by a first radar chirp of the $N$ radar chirps, and (ii) a second term corresponding to a center wavelength, $\lambda_{N/2}$, of the plurality of radar chirps of the frame.

2. The radar system of claim 1, wherein the at least one equation further includes a third term corresponding to an average range measurement from all $N$ radar chirps within the frame, $r_0 - \dfrac{vT_N}{2}$, where $T_N$ corresponds to the transmitting time of each chirp.

3. The radar system of claim 1 or 2, wherein the at least one equation includes the following equations:

$$F_1 = f_{r1}\left(r_0 - \frac{vT_N}{2}\right) - s_c\frac{2v}{\lambda_{N/2}}$$

$$F_2 = s_c s_f f_{r2} r_0 - s_c\frac{2v}{\lambda_0}$$

wherein: $F_1$ and $F_2$ represent frequencies measured after the first and second domain FFTs, respectively; $s_c$ and $s_f$ represent directions of the chirp and frame slope, respectively; $f_{r1}$ represents a first domain range frequency, defined as $f_{r1} = \dfrac{2k_c}{c}$, where $k_c$ is a chirp slope and $c$ is the speed of light; $f_{r2}$ denotes a second domain range frequency, defined as $f_{r2} = \dfrac{2k_f}{c}$; $\lambda_0$ is the wavelength of the first chirp in a frame; and $n$ is the chirp index.

4. The radar system of any one of claims 1 - 3, wherein the stepped frequency waveform of the radar signals of the $N$ radar chirps are generated to conform to the following condition:

$$\frac{f_{r1}T_N}{2} + s_c\frac{2}{\lambda_{N/2}} = 0.$$

5. The radar system of any one of claims 1 - 4, wherein the at least one processor and memory are further configured to determine whether $s_c s_f$ is greater than 0 and whether $s_c$ is less than 0 and, in response to $s_c s_f$ being greater than 0 and $s_c$ being less than 0, to unfold an index for the second domain FFT,

wherein the at least one processor and memory are optionally further configured to determine whether $s_c s_f$ is positive or negative and perform a downshift of a Doppler spectrum of the Doppler FFT values based on whether $s_c s_f$ is positive or negative,
wherein the at least one processor and memory are optionally further configured to perform an expansion of the Doppler spectrum based on a number of times a range frequency of the first domain FFT has been folded, $K$.

6. The radar system of claim 5, wherein the at least one processor and memory are further configured to calculate $K$ based on the following equation:

$$K = floor\left(\frac{idx_1 \times r_1 Bin}{r_2 Max}\right),$$

wherein $r_2 Max = \dfrac{c}{2\Delta f}$ represents a maximum coverage of the second domain range, $r_1 Bin$ is a bin size of the first domain range, and $\Delta f$ corresponds to a frequency offset between radar chirps of the $N$ radar chirps.

7. The radar system of any one of claims 1 - 6, wherein the at least one processor and memory are configured to generate the stepped frequency waveform of the $N$ radar chirps such that the initial transmit frequency and the end transmit frequency of each radar chirp after a first radar chirp are lower than the initial transmit frequency and the end transmit frequency, respectively, of an immediately preceding radar chirp.

8. The radar system of any one of claims 1 - 7, wherein the radar system is installed in a vehicle having at least one vehicle system, the at least one processor and memory are configured to communicate the estimate of the range and the velocity of the target to the at least one vehicle system, and the at least one vehicle system is configured to control at least one of a steering system, a braking system, a throttle system, or a driver alert and warning system based on the estimate of the range and the velocity of the target.

9. A method comprising:

transmitting, with at least one processor and memory of a radar system, radar signals within a frame having $N$ radar chirps, the $N$ radar chirps having a stepped frequency waveform such that an initial transmit frequency and an end transmit frequency are changed for each subsequent chirp within the $N$ radar chirps, and with $N$ being greater than 1;
receiving and sampling, with an analog-to-digital converter of the radar system, radar signals reflected from a target to generate receive values from the received and sampled radar signals;
performing, with the at least one processor and memory, range fast Fourier transform (FFT) processing, including a first domain FFT, and Doppler FFT processing, including a second domain FFT, on the receive values to generate range FFT values and Doppler FFT values;
estimating, with the at least one processor and memory, a range and a velocity of the target based on the range FFT values and Doppler FFT values, wherein the estimated range, $r$, and the estimated velocity, $v$, of the target are calculated based on at least one equation that includes (i) a first term corresponding to a target range, $r_o$, measured by a first radar chirp of the $N$ radar chirps, and (ii) a second term corresponding to a center wavelength, $\lambda_{N/2}$, of the plurality of radar chirps of the frame.

10. The method of claim 9, wherein the at least one equation further includes a third term corresponding to an average range measurement from all $N$ radar chirps within the frame, $r_0 - \dfrac{vT_N}{2}$, where $T_N$ corresponds to the transmitting time of each chirp.

11. The method of claim 9 or 10, wherein the at least one equation includes the following equations:

$$F_1 = f_{r1}\left(r_0 - \frac{vT_N}{2}\right) - s_c \frac{2v}{\lambda_{N/2}}$$

$$F_2 = s_c s_f f_{r2} r_0 - s_c \frac{2v}{\lambda_0}$$

wherein: $F_1$ and $F_2$ represent frequencies measured after the first and second domain FFTs, respectively; $s_c$ and $s_f$ represent directions of the chirp and frame slope, respectively; $f_{r1}$ represents a first domain range frequency, defined as $f_{r1} = \dfrac{2k_c}{c}$, where $k_c$ is a chirp slope and c is the speed of light; $f_{r2}$ denotes a second domain range frequency, defined as $f_{r2} = \dfrac{2k_f}{c}$; $\lambda_0$ is the wavelength of the first chirp in a frame; and $n$ is the chirp index.

12. The method of any one of claims 9 - 11, wherein the stepped frequency waveform of the radar signals of the $N$ radar chirps are generated to conform to the following condition:

$$\frac{f_{r1}T_N}{2} + s_c \frac{2}{\lambda_{N/2}} = 0.$$

13. The method of any one of claims 9 - 12, further comprising determining whether $s_c s_f$ is greater than 0 and whether $s_c$ is less than 0 and, in response to $s_c s_f$ being greater than 0 and $s_c$ being less than 0, unfolding an index for the second domain FFT,

further optionally comprising determining whether $s_c$ $s_f$ is positive or negative and performing a downshift of a Doppler spectrum of the Doppler FFT values based on whether $s_c$ $s_f$ is positive or negative,
further optionally comprising performing an expansion of the Doppler spectrum based on a number of times a range frequency of the first domain FFT has been folded, $K$,
further optionally comprising calculating $K$ based on the following equation:

$$K = floor\left(\frac{idx_1 \times r_1 Bin}{r_2 Max}\right),$$

wherein $r_2 Max = \frac{c}{2\Delta f}$ represents a maximum coverage of the second domain range, $r_1 Bin$ is a bin size of the first domain range, and $\Delta f$ corresponds to a frequency offset between radar chirps of the $N$ radar chirps.

14. The method of any one of claims 9 - 13, further comprising generating the stepped frequency waveform of the $N$ radar chirps such that the initial transmit frequency and the end transmit frequency of each radar chirp after a first radar chirp are lower than the initial transmit frequency and the end transmit frequency, respectively, of an immediately preceding radar chirp.

15. The method of any one of claims 9 - 14, wherein the radar system is installed in a vehicle having at least one vehicle system, the method further comprising communicating the estimate of the range and the velocity of the target to the at least one vehicle system, and the at least one vehicle system is configured to control at least one of a steering system, a braking system, a throttle system, or a driver alert and warning system based on the estimate of the range and the velocity of the target.

Target — 106

104 — 108

100

— 102

**FIG. 1**

Vehicle
102

Radar System
100

Transmitter
204

Receiver
206

Processor
200

Analog-to-Digital
Converter
205

Antenna Array
207

Memory
202

Transmit/Receive
208

Range FFT
210

Doppler FFT
212

Range Estimation
214

Velocity Estimation
216

Vehicle Systems
220

**FIG. 2**

**FIG. 3**

**FIG. 4**

**FIG. 5**

**FIG. 6**

**FIG. 7**

**FIG. 8**

EP 4 579 269 A1

**FIG. 9**

EP 4 579 269 A1

FIG. 10

EP 4 579 269 A1

velocity estimation error

waveform design follow guidline

no limitation

target velocity (m/s)

error (m/s)

**FIG. 11**

**FIG. 12**

$idx_2$

$s_c s_f > 0$

$idx_1$

0

Zero Doppler index for each range bin

**FIG. 13**

Unfolded aliased range frequency, when $s_c s_f > 0$

**FIG. 14**

EP 4 579 269 A1

Unfolded aliased range frequency, when $s_c s_f > 0$

**FIG. 15**

EP 4 579 269 A1

Doppler coverage in one block, when $s_c s_f > 0$ and $s_c > 0$

**FIG. 16**

De-alias Doppler velocity, when $s_c s_f > 0$ and $s_c < 0$

## FIG. 17

EP 4 579 269 A1

Target index

$(idx_1, idx_2)$ ⟶ $V_0 = s_c s_f \left( idx_1 \times \dfrac{r_1 Bin}{r_2 Bin} \right)$

Zero Doppler index:

Block index

$K = floor \left( \dfrac{idx_1 \times r_1 Bin}{r_2 Max} \right)$

700

702

704

706

is $s_c s_f < 0$ ?    708

Yes

$N_{fft} - idx_2$    710

$idx_2 - KN_{fft2}$    712

No

$idx_2 + KN_{fft2}$    711

is $s_c (V_0 - idx_2) > pVelCov$ ?    714

Yes

$idx_2 = idx_2 + s_c N_{fft2}$    718

No

is $s_c (idx_2 - V_0) > nVelCov$ ?    716

Yes

$idx_2 = idx_2 - s_c N_{fft2}$    720

No

$F_1 = idx_1 \times f_1 Bin$
$F_2 = idx_2 \times f_2 Bin$    722

Flow of calculating the first and second domain frequency

**FIG. 18**

35

Europäisches
Patentamt

European
Patent Office

Office européen
des brevets

## EUROPEAN SEARCH REPORT

**Application Number**

EP 24 18 0595

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 026 843 B2 (INFINEON TECHNOLOGIES AG [DE]) 27 September 2011 (2011-09-27) <br> * column 2, line 26 - line 38 * <br> * column 2, line 66 - column 3, line 44 * <br> * column 5, line 51 - line 59 * <br> * column 6, line 57 - column 7, line 67 * <br> * column 10, line 4 - line 19 * <br> * figures 1-9 * <br> - - - - - | 1-15 | INV. <br> G01S7/35 <br> G01S13/00 <br> G01S13/34 <br> G01S13/58 <br> G01S13/931 |
| A | US 2012/235854 A1 (TESTAR MIQUEL [DE]) 20 September 2012 (2012-09-20) <br> * abstract * <br> * paragraph [0042] - paragraph [0043] * <br> * figures 1-8 * <br> - - - - - | 1-15 | |
| | | | **TECHNICAL FIELDS SEARCHED (IPC)** <br><br> G01S |

The present search report has been drawn up for all claims

| Place of search | Date of completion of the search | Examiner |
|---|---|---|
| Munich | 31 October 2024 | Köppe, Maro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0595

This annex lists the patent family members relating to the patent documents cited in  the above-mentioned European search report.
The members are as contained in the European Patent Office EDP file on
The European Patent Office is in no way liable for these particulars which are merely given for the purpose of information.

31-10-2024

| Patent document cited in search report | | Publication date | Patent family member(s) | | Publication date |
|---|---|---|---|---|---|
| US 8026843 | B2 | 27-09-2011 | DE | 102009000468 A1 | 13-08-2009 |
| | | | US | 2010289692 A1 | 18-11-2010 |
| US 2012235854 | A1 | 20-09-2012 | CN | 102680967 A | 19-09-2012 |
| | | | EP | 2500744 A1 | 19-09-2012 |
| | | | US | 2012235854 A1 | 20-09-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3796038 A